(19) Europäisches Patentamt
European Patent Office
Office européen des brevets

(11) EP 0 985 929 B1

(12) FASCICULE DE BREVET EUROPEEN

(45) Date de publication et mention
de la délivrance du brevet:
**17.06.2009 Bulletin 2009/25**

(51) Int Cl.:
***G01N 31/22*** *(2006.01)*      ***G01N 33/18*** *(2006.01)*

(21) Numéro de dépôt: **99401774.7**

(22) Date de dépôt: **15.07.1999**

(54) **Solution aqueuse à base d'un colorant azoïque, son procédé de fabrication et son utilisation**

Wässrige Lösung auf der Grundlage eines Azo-Farbstoffes, deren Herstellungsverfahren und deren Verwendung

Aqueous solution with azo-dye, its manufacturing method and utilization

(84) Etats contractants désignés:
**AT BE CH CY DE DK ES FI FR GB GR IE IT LI LU MC NL PT SE**

(30) Priorité: **09.09.1998 FR 9811272**

(43) Date de publication de la demande:
**15.03.2000 Bulletin 2000/11**

(73) Titulaire: **Caffaro Chimica S.r.l.**
**20124 Milano (IT)**

(72) Inventeurs:
• **Mantisi, Frédérick**
**91330 Yerres (FR)**
• **Gautier, Jean-Pierre**
**78990 Elancourt (FR)**

(74) Mandataire: **De Gregori, Antonella et al**
**Ing. Barzano' & Zanardo Milano S.p.A.**
**Via Borgonuovo 10**
**20121 Milano (IT)**

(56) Documents cités:
**US-A- 5 155 048          US-A- 5 362 650**

• **I. J. FLETCHER ET AL.: "Determination of Chlorine Dioxide in Potable Waters Using Chlorophenol Red" ANALYST, vol. 110, juin 1985 (1985-06), pages 695-699, XP002104084**
• **W. MASSCHELEIN: "Spectrophotometric Determination of Chlorine Dioxide with Acid Chrome Violet K" ANALYTICAL CHEMISTRY., vol. 38, no. 13, décembre 1966 (1966-12), pages 1839-1841, XP002104085 COLUMBUS US**
• **PATENT ABSTRACTS OF JAPAN vol. 006, no. 206 (P-149), 19 octobre 1982 (1982-10-19) & JP 57 113350 A (TOYOTA JIDOSHA KOGYO KK), 14 juillet 1982 (1982-07-14)**
• **PATENT ABSTRACTS OF JAPAN vol. 008, no. 121 (P-278), 7 juin 1984 (1984-06-07) & JP 59 027249 A (NIPPON CARLIT KK), 13 février 1984 (1984-02-13)**
• **HOFMANN R. ET AL: 'Comparison of the spectrophotometric methods for measuring chlorine dioxide in drinking water' ENVIRONMENTAL TECHNOLOGY vol. 19, 1998, pages 761 - 773**

## Description

La présente invention se rapporte à une solution aqueuse (A) stable comprenant du bleu d'Evans, dont la coloration ou l'intensité de cette coloration est modifiée en présence de dioxyde de chlore, un tampon borate et un ou plusieurs agent(s) masquant(s), son procédé de fabrication et son utilisation dans la détermination du dioxyde de chlore résiduel dans l'eau.

Depuis la découverte des interactions du chlore avec les micro-organismes présents dans l'eau brute conduisant à des composés toxiques tels que les trihalométhanes, de nombreux travaux ont été menés à travers le monde en vue de trouver des solutions de remplacement pour désinfecter l'eau potable. Parmi les désinfectants proposés, figure le dioxyde de chlore. Ainsi, ces dernières décennies, le dioxyde de chlore est utilisé dans de nombreux pays pour la désinfection des eaux potables et le conditionnement des eaux industrielles.

Etant donné qu'une teneur résiduelle de désinfectant doit être présente en quantité suffisante, dans l'eau pour éviter sa recontamination ultérieurement, il est donc indispensable de pouvoir déterminer avec précision cette teneur.

Par ailleurs, lors du traitement de l'eau et dans le réseau de distribution, le dioxyde de chlore participe à diverses réactions d'oxydation qui peuvent conduire à des sous-produits de réduction et de décomposition en formant principalement des chlorures, des chlorites et des chlorates. Il apparaît donc nécessaire d'avoir un procédé de détermination de la teneur en dioxyde de chlore fiable, même en présence d'autres agents oxydants et de composés chlorés.

Enfin, le procédé de détermination de la teneur en dioxyde de chlore dans l'eau doit comporter un nombre réduit d'opérations et doit pouvoir être mis en oeuvre directement sur le site de manière à éviter les pertes de dioxyde de chlore par dégazage.

Bien que plusieurs méthodes aient été proposées pour déterminer le dioxyde de chlore, aucune ne répond à l'ensemble des critères précités. Les différentes méthodes disponibles à ce jour, notamment les méthodes colorimétriques, sont recensées dans la thèse de J.D. Peak, Edmonton, Alberta 1991. Selon J.D. Peak, ces méthodes colorimétriques étant peu sélectives, elles sont exclues de la détermination de routine dans l'industrie.

En effet, la méthode au DPD (sulfate de N,N-diéthyl-p-phénylène-diamine), n'étant pas suffisamment sélective, conduit souvent à des résultats erronés. De plus, elle ne permet pas de déterminer des teneurs en dioxyde de chlore inférieures à 0,1 mg/l.

De même, la méthode basée sur la décoloration de l'Alizarine Violet 3R (ACVK), développée par W. J. Masschelein, Analytical Chemistry, 38, (1996) 1839, a un seuil de quantification en dioxyde de chlore supérieur à 0,1 mg/l.

Pour rendre la méthode au Rouge de chlorophénol (CPR) sélective, J. Fletcher et P. Hemmings (Analyst, June 1985, vol 110, 695) ont proposé l'emploi d'agents masquants. Cette méthode comprenant plusieurs étapes consiste à mélanger l'échantillon avec une solution de cyclamate de sodium, puis à ajouter immédiatement une solution tampon tout en agitant, puis la solution de rouge de chlorophénol et enfin une solution de thioacétamide. La mesure de l'absorbance à 520 nm effectuée sur le mélange final, à l'aide d'un spectrophotomètre UV visible, permet alors de déterminer la teneur résiduelle en dioxyde de chlore dans l'échantillon.

L'inconvénient majeur de cette méthode est qu'elle implique une succession de mises en contact de l'échantillon avec une série de réactifs, provoquant ainsi des pertes considérables et incontrôlées de dioxyde de chlore par dégazage (jusqu'à 30 %).

Hofmann, Andrews et Ye (Environmental Technology, 1998, Vol.19, pp.716-773,) ont proposé d'utiliser l'amarante comme colorant dans un tampon d'ammoniaque.

Grâce à l'invention d'une solution aqueuse (A) comprenant du bleu d'Evans, dont la coloration ou l'intensité de cette coloration est modifiée en présence de dioxyde de chlore, un tampon borate et un ou plusieurs agent(s) masquant(s) par la société déposante, il est maintenant possible de déterminer avec précision et de manière sélective la teneur résiduelle en dioxyde de chlore dans l'eau, en particulier dans l'eau potable.

Le bleu d'Evans (sel tétrasodique de l'acide 6,6'-[(3,3'-diméthyl[1,1'-biphényl]-4,4'-diyl) bis(azo)] bis [4-amino-5-hydroxy-1,3-naphtalène disulfonique, $C_{34}H_{24}N_6Na_4O_{14}S_4$], C.I. 23860, est un colorant azoïque.

La concentration en bleu d'Evans dans la solution (A) est en général comprise entre $1.10^{-6}$ et $1.10^{-3}$ M. Elle est de préférence comprise entre $2.10^{-6}$ et $8.10^{-4}$ M.

Pour le bleu d'Evans, une concentration voisine de $5.10^{-5}$ M est avantageusement choisie.

L'ion borate est généralement présent dans la solution (A) à raison de $5.10^{-3}$ à $1.10^{-1}$ M. Une concentration en ion borate voisine de $5.10^{-2}$ M est préférée.

Dans ce qui précède et dans ce qui suit, on entend par agent masquant, tout composé susceptible de réagir avec le chlore libre. On peut citer à titre d'exemple la glycine, le cyclamate de métaux alcalins ou alcalino-terreux et l'ammoniaque. La quantité d'agent(s) masquant(s) mise en jeu dans la solution (A) dépend de sa ou leur nature.

On utilise de préférence l'ammoniaque, et en quantité avantageusement comprise entre 1 et 4 g/l de solution (A).

La solution aqueuse selon l'invention peut comprendre en outre un ou plusieurs complexants de métaux tel que les sels de l'EDTA (acide éthylène diamine tétraacétique). La quantité de complexant(s) mise en jeu varie en fonction de sa ou leur nature. Dans le cas du sel de sodium de l'EDTA, la quantité mise en oeuvre pour un litre de la solution (A) est en général comprise entre 0,5 et 2 g et de préférence voisine de 1 g.

Une solution (A) qui convient tout particulièrement contient par litre $5.10^{-2}$ mole de borate, $1,5.10^{-2}$ mole d'ammoniaque, 1 g de sel de sodium d'EDTA et $5.10^{-5}$ mole du bleu d'Evans.

Un autre objet de l'invention est le procédé de fabrication de la solution (A).

En général ce procédé comprend les étapes suivantes :

(a) on prépare un milieu aqueux tamponné en introduisant le colorant azoïque, le ou les agent(s) masquant(s), la solution tampon borate dans un récipient contenant une quantité suffisante d'eau bipermutée,
(b) éventuellement on y ajoute, sous agitation, le complexant préalablement dissous dans l'eau bipermutée,
et (c) on complète au volume désiré avec de l'eau bipermutée.

Un pH du milieu aqueux, préparé à l'étape (a), voisin de 9,2 est préféré.

Plus particulièrement, le procédé de fabrication d'une solution (A) comprend successivement les étapes suivantes :

(i) dans un récipient on dissout le colorant azoïque dans l'eau bipermutée,
(ii) on y introduit ensuite une solution tampon borate et enfin une solution d'agent(s) masquant(s),
(iii) on y ajoute l'eau bipermutée, puis on mesure le pH,
(iv) s'il y a lieu, on ajuste le pH à 9,2,
(v) éventuellement on dissout le complexant sous agitation,
(vi) et on complète jusqu'au volume désiré avec de l'eau bipermutée.

Avantageusement on utilise une solution d'ammoniaque pour ajuster le pH. Une solution d'ammoniaque à 28 % en poids convient particulièrement à la fois comme agent masquant et pour ajuster le pH.

La solution aqueuse (A) ainsi préparée reste stable à température ambiante pendant au moins un mois en flacon fermé.

Un troisième objet de l'invention est le procédé de détermination de la teneur résiduelle en dioxyde de chlore dans une eau industrielle ou l'eau potable après traitement biocide ou de désinfection et dans les circuits de distribution. Ce procédé consiste à mettre en contact l'eau à analyser avec la solution aqueuse (A), puis à mesurer l'absorbance de la solution résultante (S), à l'aide d'un spectrophotomètre UV-visible, à la longueur d'onde spécifique du colorant azoïque. Elle est de 606 nm dans le cas du bleu d'Evans.

Cette mise en contact est en général effectuée dans un rapport volumique eau à analyser/solution aqueuse (A) compris entre 10 et 30 et de préférence voisin de 24.

La mesure d'absorbance est en général effectuée en prenant comme référence l'eau à analyser dans laquelle on a ajouté une quantité suffisante d'un réducteur notamment un réducteur de dioxyde de chlore, comme par exemple le thiosulfate de sodium.

Avantageusement on met en contact l'eau à analyser avec la solution (A) contenant par litre, $5.10^{-2}$ mole de borate, $1,5.10^{-2}$ mole d'ammoniaque, 1 g de sel de sodium d'EDTA et $5.10^{-5}$ mole du bleu d'Evans.

De préférence l'eau à analyser est prélevée directement de la source et la mise en contact est effectuée, en plongeant l'arrivée d'eau à analyser dans la solution (A). Cette façon d'opérer permet d'éviter toute perte de dioxyde de chlore par dégazage et de minimiser les erreurs provenant du prélèvement de l'échantillon à analyser.

On mesure alors à l'aide d'un spectrophotomètre UV visible, en cuve en quartz de 2,5 cm de trajet optique, l'absorbance de la solution résultante à la longueur d'onde spécifique du bleu d'Evans, en utilisant comme référence l'eau à analyser à laquelle on a additionné du thiosulfate de sodium.

En reportant sur la courbe d'étalonnage la mesure de l'absorbance par rapport à la référence, on obtient la teneur résiduelle en dioxyde de chlore dans l'eau à analyser.

La droite d'étalonnage est généralement préalablement établie, de façon connue, à partir d'une gamme de solutions de dioxyde de chlore de concentrations connues et limitées à la partie linéaire de la courbe d'étalonnage (c'est à dire inférieure à 500 $\mu$g de $ClO_2$ par litre).

Le procédé de détermination peut être facilement adapté à des spectrophotomètres équipés de trajets optiques différents (1 ou 5 ou 10 cm) en ajustant la concentration du colorant dans la solution (A) et en établissant la droite d'étalonnage correspondante.

Le procédé selon la présente invention permet ainsi de déterminer de façon sélective la teneur résiduelle en dioxyde de chlore dans l'eau potable ou l'eau industrielle en quantité aussi faible que 6 $\mu$g/l. De plus, après la mise en contact de la solution aqueuse (A) avec l'eau à analyser, la mesure spectrophotométrique UV-visible peut être même effectuée au bout de 7 à 10 jours.

## PARTIE EXPERIMENTALE

Les exemples suivants illustrent un mode de réalisation préféré de l'invention.

## Exemple

Préparation de la solution (A)

On prépare un litre de la solution A en faisant :

(i) dissoudre dans environ 100 ml d'eau bipermutée, 56,5 mg du bleu d'Evans, réf.20,663-4 ALDRICH,

(ii) en dissolvant 3,09 g d'acide borique dans 500 ml d'une solution 0,1 M en KCl, et en homogénéisant le milieu,

(iii) puis en introduisant successivement dans un bécher d'un litre la totalité de la solution de bleu d'Evans préparée en (i), la solution tampon préparée en (ii) et 1 ml d'une solution d'ammoniaque concentrée à 28 % en poids,

(iv) on y ajoute ensuite 300 ml d'eau bipermutée et on mesure alors le pH de la solution résultante,

(v) on ajuste le pH de la solution obtenue en (iv) à 9,2 à l'aide de la solution d'ammoniaque concentrée à 28 % en poids,

(vi) puis on y ajoute 1g de sel de sodium d'EDTA et on agite jusqu'à sa dissolution,

(vii) enfin on transvase la solution obtenue (vi) dans une fiole jaugée de 1 000 ml et on complète avec l'eau bipermutée jusqu'au trait de jauge.

Préparation des solutions étalon de dioxyde de chlore

On prépare une solution mère à environ 10 mg/l en diluant dans de l'eau bipermutée une solution de dioxyde de chlore obtenue par (i) décomposition de chlorite de sodium en présence d'acide sulfurique, (ii) purification du dioxyde de chlore formé en (i) par bullage dans une solution de chlorite et (iii) solubilisation dans l'eau bipermutée du dioxyde de chlore ainsi purifié.

On mesure ensuite l'absorbance de la solution mère à 360 nm au spectrophotomètre UV-visible dans une cuve en quartz de 5 cm, après avoir ajusté l'appareil au zéro d'absorbance par rapport à l'eau bipermutée.

Puis on calcule la concentration de la solution mère à l'aide de la formule :

$$C = \frac{AB \times 67\ 450}{1\ 250 \times L}$$

où C désigne la concentration de la solution mère en mg $ClO_2$/l

AB désigne l'absorbance de la solution

L, la longueur de cuve en cm

Les valeurs 1 250 et 67 450 correspondent respectivement à l'absorption molaire du dioxyde de chlore en $M^{-1}\ cm^{-1}$ et au poids moléculaire en mg.

Courbe d'étalonnage de la décoloration au bleu d'Evans

On prépare six solutions étalon de concentration en dioxyde de chlore dans la gamme comprise entre 20 et 500 µg/l, en introduisant dans six fioles jaugées de 250 ml, 10 ml de la solution A, puis un volume (V) variable suivant la concentration souhaitée, de la solution mère.

On prélève le volume (V) de la solution mère à l'aide de pipettes de précision et on introduit ce volume dans la fiole jaugée en immergeant la pointe de la pipette dans la solution A, en évitant tout brassage et ruissellement sur les parois de la fiole, de façon à éviter toute perte de dioxyde de chlore par dégazage.

On complète ensuite avec de l'eau bipermutée jusqu'au trait de jauge et on homogénéise, en prenant la précaution d'éviter toute perte de dioxyde de chlore, la solution étalon ainsi préparée. Enfin on la laisse reposer pendant 30 secondes.

Les solutions résultantes sont stables au moins une semaine.

On prépare la référence (R) en introduisant 10 ml de la solution A dans une septième fiole jaugée et on la complète jusqu'au trait de jauge avec de l'eau bipermutée.

A l'aide d'un spectrophotomètre UV-visible, on mesure l'absorbance à 606 nm des solutions résultantes par rapport à la référence dans des cuves de 2,5 cm. On trace ensuite la droite d'étalonnage donnant l'absorbance mesurée en fonction de la concentration en dioxyde de chlore des solutions résultantes.

Détermination de la teneur résiduelle en dioxyde de chlore dans l'eau potable après traitement.

On introduit 10 ml de la solution aqueuse obtenue en (vii) dans une fiole jaugée de 250 ml, puis on complète jusqu'au trait de jauge avec de l'eau à analyser provenant directement de la source, par l'intermédiaire d'un tube plongeant dans la solution aqueuse. Ensuite, on homogénéise, en prenant la précaution d'éviter toute perte de dioxyde de chlore, la solution résultante, qui reste stable pendant 7 à 10 jours.

On mesure à l'aide d'un spectrophotomètre UV-visible en cuve en quartz de 2,5 cm de trajet optique, l'absorbance de la solution résultante à 606 nm, en utilisant comme référence l'eau à analyser à laquelle on a additionné un excès de thiosulfate de sodium purifié et cristallisé, par rapport à la quantité nécessaire pour réduire la totalité des oxydants présents dans l'eau à analyser.

On détermine ensuite la teneur résiduelle en dioxyde de chlore dans l'échantillon en reportant l'absorbance mesurée sur la droite d'étalonnage.

**Revendications**

1. Solution aqueuse comprenant du bleu d'Evans, dont la coloration ou l'intensité de cette coloration est modifiée en présence de dioxyde de chlore, un tampon borate et un ou plusieurs agent(s) masquant(s).

2. Solution aqueuse selon la revendication 1 **caractérisée en ce que** le bleu d'Evans est présent en concentration comprise entre $1.10^{-6}$ et $1.10^{-3}$ mole/litre, de préférence entre $2.10^{-5}$ et $8.10^{-4}$ mole/litre.

**3.** Solution aqueuse selon l'une des revendications 1 ou 2 **caractérisée en ce que** l'agent masquant est l'ammoniaque.

**4.** Solution aqueuse selon l'une des revendications 1 à 3 **caractérisée en ce que** le borate est présent en concentration comprise entre $5.10^{-3}$ et $1.10^{-1}$ mole/litre.

**5.** Solution aqueuse selon l'une des revendications 1 à 4 **caractérisée en ce qu'**elle comprend en outre un ou plusieurs complexant(s) de métaux.

**6.** Solution aqueuse selon la revendication 5 **caractérisée en ce que** le complexant est le sel de sodium l'EDTA.

**7.** Solution aqueuse selon la revendication 6 **caractérisée en ce qu'**elle contient $5.10^{-2}$ mole de borate, $1,5.10^{-2}$ mole d'ammoniaque, 1 g de sel de sodium d'EDTA et $5-10^{-5}$ mole du bleu d'Evans.

**8.** Procédé de fabrication d'une solution aqueuse selon l'une des revendications 1 à 7 **caractérisé en ce qu'**il comprend les étapes suivantes :

> (a) on prépare un milieu aqueux tamponné en introduisant du bleu d'Evans, le ou les agent(s) masquant(s), la solution tampon borate dans un récipient contenant une quantité suffisante d'eau bipermutée,
> (b) on y ajoute, sous agitation, le complexant préalablement dissous dans l'eau bipermutée, et (c) on complète au volume avec de l'eau bipermutée.

**9.** Procédé selon la revendication 8 **caractérisé en ce qu'**il comprend les étapes suivantes :

> (i) on dissout le blue d'Evans dans l'eau bipermutée,
> (ii) on introduit dans un récipient la solution préparée en (i), puis une solution tampon borate et enfin une solution d'agent(s) masquant(s),
> (iii) on y ajoute l'eau bipermutée, puis on mesure le pH,
> (iv) s'il y a lieu, on ajuste le pH à 9,2 à l'aide d'une solution d'ammoniaque concentrée,
> (v) éventuellement on dissout le complexant sous agitation,
> (vi) et on complète jusqu'au volume désiré avec de l'eau bipermutée.

**10.** Procédé selon la revendication 9 **caractérisé en ce que** l'on utilise une solution d'ammoniaque concentrée à 28 % en poids aux étapes (ii) et (iv).

**11.** Procédé selon la revendication 10 **caractérisé en ce qu'**il consiste :

> (i) à dissoudre dans environ 100 ml d'eau bipermutée, 56,5. mg du bleu d'Evans,
> (ii) à préparer une solution tampon contenant $5.10^{-2}$M en borate en dissolvant 3,09 g d'acide borique dans 500 ml d'une solution 0,1 M en KCI, et en homogénéisant le milieu,
> (iii) puis à introduire successivement dans un bécher d'un litre la totalité de la solution du bleu d'Evans préparée en (i), la solution tampon préparée en (ii) et 1 ml d'une solution d'ammoniaque concentrée à 28 % en poids,
> (iv) on y ajoute ensuite 300 ml d'eau bipermutée et on mesure alors le pH de la solution résultante,
> (v) on ajuste le pH de la solution obtenue en (iv) à 9,2 à l'aide de la solution d'ammoniaque concentrée à 28 % en poids,
> (vi) puis on y ajoute 1g de sel de sodium d'EDTA et on agite jusqu'à sa dissolution,
> (vii) enfin on transvase la solution obtenue (vi) dans une fiole jaugée de 1000ml et on complète avec l'eau bipermutée jusqu'au trait de jauge.

**12.** Procédé de détermination de la teneur résiduelle en dioxyde de chlore dans l'eau industrielle ou l'eau potable après traitement ou dans les circuits de distribution **caractérisé en ce qu'**il comprend la mise en contact de l'eau à analyser avec la solution aqueuse (A) selon l'une des revendications 1 à 7, suivie d'une mesure à l'aide d'un spectrophotomètre UV-visible de l'absorbance de la solution résultante, à la longueur d'onde spécifique du colorant choisi..

**13.** Procédé selon la revendication 12 **caractérisé en ce que** la mise en contact est effectuée dans un rapport volumique eau à analyser/solution aqueuse (A) compris entre 10 et 30.

**14.** Procédé selon la revendication 12 ou 13 **caractérisé en ce que** la solution aqueuse A est préparée selon la revendication 12.

**15.** Procédé selon la revendication 14 **caractérisé en ce que** l'on introduit 10 ml de la solution aqueuse selon la revendication 13 dans une fiole jaugée de 250 ml, puis on complète jusqu'au trait de jauge avec de l'eau à analyser et enfin on mesure l'absorbance de la solution résultante, à l'aide d'un spectrophotomètre UV visible, à 606 nm, pour le bleu d'Evans.

**Claims**

**1.** Aqueous solution comprising Evans Blue, whose coloration or coloration intensity is modified in the presence of chlorine dioxide, a borate buffer and one or more masking agent(s).

2. Aqueous solution according to Claim 1, **characterized in that** the Evans Blue is present in a concentration of between $1 \cdot 10^{-6}$ and $1 \cdot 10^{-3}$ mole/litre, preferably between $2 \cdot 10^{-5}$ and $8 \cdot 10^{-4}$ mole/litre.

3. Aqueous solution according to one of Claims 1 or 2, **characterized in that** the masking agent is aqueous ammonia.

4. Aqueous solution according to one of Claims 1 to 3, **characterized in that** the borate is present in a concentration of between $5 \cdot 10^{-3}$ and $1 \cdot 10^{-1}$ mole/litre.

5. Aqueous solution according to one of Claims 1 to 4, **characterized in that** it further comprises one or more metal-complexing agent(s).

6. Aqueous solution according to Claim 5, **characterized in that** the complexing agent is the sodium salt of EDTA.

7. Aqueous solution according to Claim 6, **characterized in that** it comprises $5 \cdot 10^{-2}$ mole of borate, $1.5 \cdot 10^{-2}$ mole of aqueous ammonia, 1 g of sodium salt of EDTA and $5 \cdot 10^{-5}$ mole of Evans Blue.

8. Process for the preparation of an aqueous solution according to one of Claims 1 to 7, **characterized in that** it comprises the following steps:

   (a) preparation of a buffered aqueous medium by introduction of Evans Blue, the masking agent(s) and the borate buffer solution into a container containing a sufficient amount of double-deionised water;
   (b) addition of the complexing agent pre-dissolved in double-deionised water with stirring; and
   (c) making-up of the solution to the volume with double-deionised water.

9. Process according to Claim 8, **characterized in that** it comprises the following steps:

   (i) dissolution of Evans Blue in double-deionised water;
   (ii) introduction of the solution prepared in (i) into a container, followed by a borate buffer solution, and finally a solution of masking agent(s);
   (iii) addition of double-deionised water and measurement of the pH;
   (iv) adjustment of the pH to 9.2, if necessary, using concentrated aqueous ammonia solution;
   (v) optional dissolution of the complexing agent with stirring; and
   (vi) making-up of the solution to the desired volume with double-deionised water.

10. Process according to Claim 9, **characterized in that** an aqueous ammonia solution concentrated to 28% by weight is used in steps (ii) and (iv).

11. Process according to Claim 10, **characterized in that** it consists of:

    (i) dissolution of 56.5 mg of Evans Blue in about 100 ml of double-deionised water;
    (ii) preparation of a $5 \cdot 10^{-2}$ M borate buffer solution by dissolution of 3.09 g of boric acid in 500 ml of 0.1 M KCl solution and homogenization of the medium;
    (iii) successive introduction into a one litre flask of all of the Evans Blue solution prepared in (i), the buffer solution prepared in (ii), and 1 ml of aqueous ammonia solution concentrated to 28% by weight;
    (iv) addition of 300 ml of double-deionised water and then measurement of the pH of the resultant solution;
    (v) adjustment of the pH of the solution obtained in (iv) to 9.2 using aqueous ammonia solution concentrated to 28% by weight;
    (vi) then addition of 1 g of the sodium salt of EDTA with stirring until fully dissolved; and finally
    (vii) transfer of the solution obtained in (vi) into a 1000 ml graduated flask and making-up of the volume to the graduation mark with double-deionised water.

12. Process for determination of the residual chlorine dioxide content in industrial water or drinking water after treatment or in distribution circuits, **characterized in that** it comprises the steps of placing the water to be analyzed in contact with the aqueous solution (A) according to one of Claims 1 to 7, followed by measurement of the absorbance of the resultant solution using a UV-visible spectrophotometer at the specific wavelength of the chosen dye.

13. Process according to Claim 12, **characterized in that** the placing in contact is performed in a water to be analyzed to aqueous solution (A) volume ratio of between 10 and 30.

14. Process according to Claim 12 or 13, **characterized in that** the aqueous solution A is prepared according to Claim 12.

15. Process according to Claim 14, **characterized in that** 10 ml of the aqueous solution according to Claim 13 are introduced into a 250 ml graduated flask and made up to the graduation mark with water to be analyzed, and finally the absorbance of the resultant solution is measured using a UV-visible spectrophotometer at 606 nm for Evans Blue.

**Patentansprüche**

1. Wässrige Lösung, umfassend Evans Blau, dessen Färbung oder Färbungsintensität in Gegenwart von Chlordioxid verändert wird, einen Boratpuffer und ein oder mehrere Maskierungsmittel.

2. Wässrige Lösung nach Anspruch 1, **dadurch gekennzeichnet, dass** das Evans Blau in einer Konzentration zwischen $1.10^{-6}$ und $1.10^{-3}$ Mol/Liter, vorzugsweise zwischen $2.10^{-5}$ und $8.10^{-4}$ Mol/Liter, vorliegt.

3. Wässrige Lösung nach einem der Ansprüche 1 oder 2, **dadurch gekennzeichnet, dass** das Maskierungsmittel Ammoniak ist.

4. Wässrige Lösung nach einem der Ansprüche 1 bis 3, **dadurch gekennzeichnet, dass** das Borat in einer Konzentration zwischen $5.10^{-3}$ und $1.10^{-1}$ Mol/Liter vorliegt.

5. Wässrige Lösung nach einem der Ansprüche 1 bis 4, **dadurch gekennzeichnet, dass** sie außerdem einen oder mehrere Metallkomplexbildner umfasst.

6. Wässrige Lösung nach Anspruch 5, **dadurch gekennzeichnet, dass** der Komplexbildner EDTA-Natriumsalz ist.

7. Wässrige Lösung nach Anspruch 6, **dadurch gekennzeichnet, dass** sie $5.10^{-2}$ Mol Borat, $1,5.10^{-2}$ Mol Ammoniak, 1 g EDTA-Natriumsalz und $5-10^{-5}$ Evans Blau enthält.

8. Verfahren zur Herstellung einer wässrigen Lösung nach einem der Ansprüche 1 bis 7, **dadurch gekennzeichnet, dass** es die folgenden Schritte umfasst:

   (a) man stellt ein gepuffertes wässriges Medium her, indem man Evans Blau, das oder die Maskierungsmittel, die Boratpufferlösung in einen Behälter einführt, der eine ausreichende Menge an zweifach ausgetauschtem Wasser enthält,
   (b) man setzt unter Rühren den Komplexbildner zu, der zuvor in zweifach ausgetauschtem Wasser gelöst wurde, und
   (c) man ergänzt auf das Volumen mit zweifach ausgetauschtem Wasser.

9. Verfahren nach Anspruch 8, **dadurch gekennzeichnet, dass** es die folgenden Schritte umfasst:

   (i) man löst Evans Blau in zweifach ausgetauschtem Wasser,
   (ii) man bringt in einen Behälter die unter (i) hergestellte Lösung und dann eine Borat-Pufferlösung und schließlich eine Maskierungsmittellösung ein,
   (iii) man setzt zweifach ausgetauschtes Wasser zu und misst den pH-Wert,
   (iv) gegebenenfalls stellt man den pH-Wert mit Hilfe einer konzentrierten Ammoniaklösung auf 9,2 ein,
   (v) gegebenenfalls löst man den Komplexbildner unter Rühren,
   (vi) und ergänzt mit zweifach ausgetauschtem Wasser auf das gewünschte Volumen.

10. Verfahren nach Anspruch 9, **dadurch gekennzeichnet, dass** man in den Schritten (ii) und (iv) eine auf 28 Gew.-% konzentrierte Ammoniaklösung verwendet.

11. Verfahren nach Anspruch 10, **dadurch gekennzeichnet, dass** es darin besteht, dass man

   (i) in etwa 100 ml zweifach ausgetauschtem Wasser 56,5 mg Evans Blau löst,
   (ii) eine Pufferlösung herstellt, die $5.10^{-2}$ M an Borat enthält, indem man 3,09 g Borsäure in 500 ml einer 0,1 M KCl-Lösung löst und indem man das Medium homogenisiert,
   (iii) dann in ein 1-1-Becherglas nacheinander die gesamte unter (i) hergestellte Evans Blau-Lösung, die unter (ii) hergestellte Pufferlösung und 1 ml einer auf 28 Gew.-% konzentrierten Ammoniaklösung einführt,
   (iv) dann 300 ml zweifach ausgetauschtes Wasser zusetzt und den pH-Wert der gebildeten Lösung misst,
   (v) man den pH-Wert der unter (iv) erhaltenen Lösung mit Hilfe der auf 28 Gew.-% konzentrierten Ammoniaklösung auf 9,2 einstellt,
   (vi) dann 1 g EDTA-Natriumsalz zusetzt und bis zu seiner Auflösung rührt,
   (vii) schließlich die erhaltene Lösung (vi) in einen Messbecher von 1000 ml umgießt und mit zweifach ausgetauschtem Wasser bis zur Marke ergänzt.

12. Verfahren zur Bestimmung des Chlordioxid-Restgehalts in Industriewasser oder Trinkwasser nach Behandlung oder in den Verteilungskreisen, **dadurch gekennzeichnet, dass** es das In-Kontakt-Bringen des zu analysierenden Wassers mit der wässrigen Lösung

   (A) nach einem der Ansprüche 1 bis 7 umfasst, worauf eine Messung der Absorbanz der gebildeten Lösung mit Hilfe eines UV/VIS-Spektrofotometers bei der spezifischen Wellenlänge des gewählten Farbstoffs folgt.

**13.** Verfahren nach Anspruch 12, **dadurch gekennzeichnet, dass** das In-Kontakt-Bringen in einem Volumenverhältnis von zu analysierendem Wasser/wässriger Lösung (A) zwischen 10 und 30 durchgeführt wird.

**14.** Verfahren nach Anspruch 12 oder 13, **dadurch gekennzeichnet, dass** die wässrige Lösung A gemäß Anspruch 12 hergestellt wird.

**15.** Verfahren nach Anspruch 14, **dadurch gekennzeichnet, dass** man 10 ml der wässrigen Lösung nach Anspruch 13 in einen Messbecher von 250 ml einführt, dann bis zur Marke mit dem zu analysierenden Wasser ergänzt und schließlich die Absorbanz der gebildeten Lösung mit Hilfe eines UV/VIS-Spektrofotometers bei Evans Blau bei 606 nm misst.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W. J. Masschelein.** *Analytical Chemistry,* 1996, vol. 38, 1839
- **J. Fletcher ; P. Hemmings.** *Analyst,* Juin 1985, vol. 110, 695
- **Hofmann ; Andrews ; Ye.** *Environmental Technology,* 1998, vol. 19, 716-773